Europäisches Patentamt

European Patent Office

Office européen des brevets

(19)

(11) Publication number: 0 368 458
A1

## (12) EUROPEAN PATENT APPLICATION

(21) Application number: 89309638.8

(22) Date of filing: 21.09.89

(51) Int. Cl.5: G09B 9/04, A63J 23/02

(30) Priority: 24.09.88 GB 8822504

(43) Date of publication of application:
16.05.90 Bulletin 90/20

(84) Designated Contracting States:
AT BE CH DE ES FR GB GR IT LI LU NL SE

(71) Applicant: 'SUPER X' LTD.
Briton House Briton Street
Southampton SO1 1BS(GB)

(72) Inventor: Denne, Phillip Michael Raymond
7 Lyndon Gate, Chine Crescent Road
Bournemouth BH2 5LG Dorset(GB)

(74) Representative: Gibson, Stewart Harry
URQUHART-DYKES & LORD Business
Technology Centre Senghennydd Road
Cardiff CF2 4AY South Wales(GB)

(54) Simulator apparatus.

(57) A control system controls a plurality of inter-
active travel simulators (1) each comprising an ex-
perience generator (8) storing visual data and motion
data for the respective simulator, a correlator (9)
being provided for updating the visual data for each
simulator in accordance with the relative positions of
the other simulators in the simulated field of travel.

FIG.1.

## SIMULATOR APPARATUS

### FIELD OF THE INVENTION

This invention relates to simulator apparatus and more particularly to a control system for use in a simulator apparatus.

### BACKGROUND OF THE INVENTION

Travel simulators are known in which an audience views a pre-recorded continuous film of a forward-facing view, e.g. through a car windscreen, whilst the audience is subjected to sound and movement and possibly tactile and olefactory stimuli to simulate the real travel experience. Travel simulators are also known in which the actions of one or more "crew" can influence the behaviour of the simulator, e.g. change of course and speed. Simulators of the latter type are used for training e.g. pilots. Some arcade video games are similar, in that the visual scene can be influenced by steering controls and in some much machines the seat position can be influenced by the player. Such simulators are therefore interactive simulators.

### SUMMARY OF THE INVENTION

In accordance with this invention, there is provided a control system for a plurality of travel simulators, comprising means storing visual scene data for the respective simulators to provide for each simulator a visual display of a view from that simulator, and means for updating the visual scene data for each simulator in accordance with the relative positions of the other simulators in the simulated field of travel.

The arrangement enables persons in different simulators to inter-relate with the other simulators in the group and thus enhance their experience. Preferably the simulators are interactive.

Preferably each simulator is provided with its own local experience generator which stores visual data, sound information and motion data, the motion data being used to control means imparting movement to the simulator to simulate the motion depicted in the view which is being displayed. Preferably each simulator is provided with its own local controller for controlling the movement imparting means in accordance with the motion data and also in accordance with signals from manual controls within the simulator.

Preferably the control system further comprises a central controller for transmitting commands to and receive status reports from the local controllers of the respective simulators: for example the central controller is used by a supervisor to start the plurality of simulators simultaneously. The central controller may comprise a simple on/off control unit preferably with simple status indications and may for example comprise a coin acceptance unit.

Preferably each local experience generator and each local controller are mounted on or adjacent the respective simulator. With this arrangement, the number of cables running to each simulator from the central controller can be minimised.

### BRIEF DESCRIPTION OF THE DRAWINGS

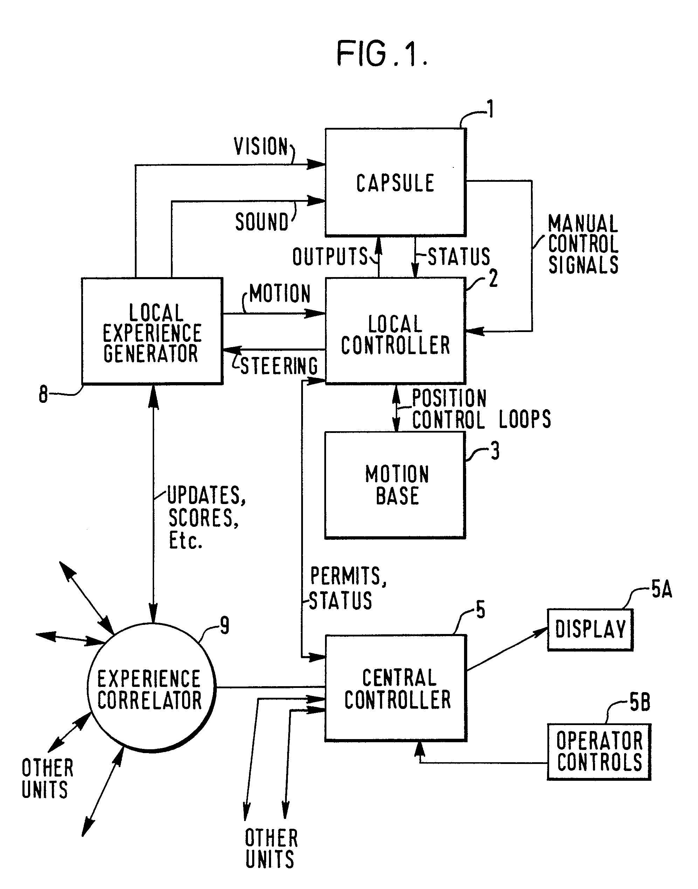

An embodiment of this invention will now be described by way of example only and with reference to the accompanying drawings, the single figure of which is a schematic block diagram of a control system for a plurality of interactive travel simulators.

### DETAILED DESCRIPTION OF THE DRAWINGS

Referring to the drawings, there is shown a control system for a plurality of interactive travel simulators. Each simulator comprises a capsule 1 in which an audience is shown a continuous film or display of a forward view, e.g. through a car windscreen, and a motion base 3 on which the capsule 1 is mounted: the motion base 3 comprises e.g. hydraulic actuators for producing movement of the capsule 1 to simulate the motion depicted in the film or display which is being shown to the audience within the capsule. Each capsule includes manual controls (e.g. steering wheel, levers or joysticks) for use by the "driver" or "pilot", to simulate steering, acceleration, deceleration etc.

Each simulator is provided with an experience generator 8 which comprises a computer system storing visual information relating to the territory or space through which the simulator vehicle may "travel", sound information, and motion information. In operation, the visual information drives a visual display within the capsule 1, the corresponding sound information drives loudspeakers within the capsule 1, and the motion information is used by a local controller 2 of the simulator to control the actuators of the motion base 3 produce movements of the capsule matched to the motion depicted in the visual display.

The local controller 2 of each simulator controls or manages the respective capsule 1 and motion base 3 substantially on its own, but receives occasional commands from and transmits occasional status reports to a central controller 5, which is common to the plurality of simulators. The central controller 5 has a display 5A and controls 5B for use by an operator supervising the simulators. For example, the local controller of each simulator receives status signals from the capsule, e.g. indicating whether the door is closed, whether an emergency button is pressed etc. and such status signals are passed to the central controller for display at 5A. The operator controls are used for example to start (or e.g. in an emergency to stop) the plurality of simulators and the corresponding signals pass to the local controller of each simulator.

Each local controller 2 also receives signals from the manual controls within the respective capsule 1. The local controller processes these signals to apply steering commands to the experience generator 8, for modifying the view being displayed within the capsule in accordance with the control effected by the "driver".

The local controller 2 and experience generator 8 may be mounted on a stationary part of the motion base or adjacent thereto, or if robust enough they may be mounted on or within the capsule 1.

A central experience correlator 9 is provided and serves to update the visual information of each local experience generator 8 in accordance with the simulated movements of the other capsules. Thus for example the scene displayed in one simulator will include, in the correct positions, the vehicles represented by any other simulators which are "ahead" of it. The central experience correlator 9 also informs each local experience generator of actions such as gun fire hits by or to respective simulators or of impacts between individual vehicles e.g. racing cars. In competitive situations, the central experience correlator 9 also accumulates individual scores and other achievement data from the various simulators and passess this to the central controller 5 for display at 5A.

Instead of having a central experience correlator 9, to which all local experiene generators 8 are connected, the experience correlator may be distributed amongst the local experience generators. In such case the local experience generators are interconnected with each other to provide data to each other, with each responding to data received from the others to update its visual information.

## Claims

1) A control system for a plurality of travel simulators, comprising means (8) storing visual scene data for the respective simulators (1) to provide for each simulator (1) a visual display of a view from that simulator, and means (9) for updating the visual scene data for each simulator in accordance with the relative positions of the other simulators in the simulated field of travel.

2) A control system as claimed in claim 1, in which an experience generator (8) is provided for each simulator and stores the visual scene data for the respective simulator.

3) A control system as claimed in claim 1 or 2, in which each simulator includes means (3) for imparting movement thereto and a local controller (2) controlling the movement imparting means (3) in accordance with stored motion data.

4) A control system as claimed in claim 3, in which the simulators are interactive and in which each local controller (2) is arranged to receive and process signals from manual controls within the respective simulator (1).

5) A control system as claimed in claim 2, 3 or 4, in which each experience generator (8) and/or each local controller (2) is mounted on or within the respective simulator.

6) A control system as claimed in claim 2, 3 or 4, in which each experience generator (8) and/or each local controller (2) is mounted adjacent the respective simulator.

# FIG.1.

| European Patent Office | EUROPEAN SEARCH REPORT |
|---|---|

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | WO-A-8 602 753 (VIDEO-DROME LTD.) * abstract; page 4, line 22 - page 6, line 5; page 6, line 17 - page 9, line 6; claims 1-5,7,10,12,14,17; figures 1-3 * | 1 | G 09 B 9/04 A 63 J 23/02 A 63 F 9/22 |
| A | DE-A-3 418 245 (IBP PIETZSCH GMBH) * page 5, line 25 - page 8, line 4; figures 1-3 * | 1,3,4 | |

TECHNICAL FIELDS SEARCHED (Int. Cl.5)

G 09 B 9/00
A 63 F 9/00
A 63 J 23/00
A 63 G 31/00
G 06 F 15/00
F 41 G 3/00

The present search report has been drawn up for all claims

| Place of search | Date of completion of the search | Examiner |
|---|---|---|
| BERLIN | 18-01-1990 | BEITNER M.J.J.B. |